# EUROPÄISCHE PATENTSCHRIFT

(11) **EP 3 387 718 B1**
(45) Veröffentlichungstag und Bekanntmachung des Hinweises auf die Patenterteilung: **30.06.2021**
(21) Anmeldenummer: 16802012.1
(22) Anmeldetag: 22.11.2016
(51) Int. Cl.: H01T 1/14, H02H 9/04

(54) **ELEKTRISCHES SCHUTZBAUELEMENT MIT KURZSCHLUSSEINRICHTUNG**
ELECTRICAL PROTECTION COMPONENT HAVING A SHORT-CIRCUIT DEVICE
COMPOSANT DE PROTECTION ÉLECTRIQUE AVEC DISPOSITIF DE COURT-CIRCUIT

(30) Priorität: 09.12.2015 DE 102015121438
(43) Veröffentlichungstag der Anmeldung: 17.10.2018
(73) Patentinhaber: TDK Electronics AG, 81671 München (DE)
(72) Erfinder: KEE KHON, Lau, 80350 Johor Bahru (MY); WERNER, Frank, 13591 Berlin (DE)
(74) Vertreter: Epping - Hermann - Fischer
(86) Internationale Anmeldenummer: PCT/EP2016/078447
(87) Internationale Veröffentlichungsnummer: WO 2017/097584

(56) Entgegenhaltungen:
- EP-A2- 0 516 922
- DE-A1- 19 708 651
- DE-A1-102008 022 794
- DE-A1-102011 102 941
- US-A1- 2014 361 070

## Beschreibung

Die Erfindung betrifft ein elektrisches Schutzbauelement, umfassend einen Überspannungsableiter, mit Kurzschlusseinrichtung.

Eine Kurzschlusseinrichtung erlaubt, die Elektroden eines Bauelements elektrisch leitend zu verbinden, das heißt kurzzuschließen. Kurzschlussmechanismen gibt es für Zwei-Elektroden-Ableiter und Drei-Elektroden-Ableiter. Im Fall von Dauerströmen können sie den Ableiter vor Dauerüberlast schützen. Die Kurzschlussmechanismen können ein schmelzbares Element aufweisen, das bei höheren Temperaturen schmilzt, woraufhin beispielsweise die Mittelelektrode eines Drei-Elektroden-Ableiters mit einer oder beiden Seitenelektroden des Ableiters kurzgeschlossen wird.

Die Kurzschlusseinrichtung kann einen Bügel aufweisen, der im Kurzschlussfall die Elektroden verbindet. Vor Auslösen der Kurzschlusseinrichtung kann die elektrische Verbindung der Elektroden mittels schmelzbarer Plastik- oder Polymerfolie unterbrochen sein, die durch die mit der Überlast einhergehende Erwärmung beim Auslösen der Kurzschlusseinrichtung schmilzt und damit die elektrische Verbindung zwischen den Elektroden ermöglicht. DE 10 2008 035 903 und DE 196 22 461 zeigen Schutzbauelemente mit Kurzschlusseinrichtungen für einen Drei-Elektroden-Ableiter.

Das Dokument EP0516922 offenbart ein Gerät gemäß dem Oberbegriff des Anspruchs 1.

Eine Kurzschlusseinrichtung für einen Drei-Elektroden-Ableiter kann einen Federkontakt mit zwei Armen, der auf die Mittelelektrode aufgebracht oder geschweißt ist, umfassen.

Ein dünnes isolierendes Material verhindert den Kontakt von Armen und Seitenelektroden. Das dünne isolierende Material kann beispielsweise eine Polymerfolie sein. Im Falle einer Überspannung schmilzt das isolierende Material unter zumindest einem der Arme, sodass es zu einem Kurzschluss zwischen der Mittelelektrode und der Seitenelektrode kommt.

Es stellt sich die Aufgabe, ein alternatives elektrisches Schutzbauelement mit Kurzschlusseinrichtung bereitzustellen.

Das elektrische Schutzbauelement mit Kurzschlusseinrichtung ist in Anspruch 1 beschrieben.

Für das Schutzbauelement ist eine Kombination eines Schmelzelements mit hoher Schmelztemperatur, vorzugsweise 300 Grad Celsius oder mehr, und eines Klippmechanismus vorgesehen. Letzterer ist geeignet, den hohen Temperaturen standzuhalten und eine beständige Spannkraft auszuüben, um die Kurzschlussfunktion für die zuverlässige Kurzschlusseinrichtung bereitzustellen. Ein Klipp ist eine elastisch verformbare Klammer, die mittels ihrer von der Verformung beim zumindest teilweisen Umgreifen des Überspannungsleiters herrührenden Federkraft am Überspannungsleiter befestigt ist.

Das Schutzbauelement mit solch einer Kurzschlusseinrichtung kann von geringer Größe und in kompakter Weise ausgebildet sein. Es ermöglicht, einen Überspannungsableiter vor Dauerüberlast zu schützen, indem in solch einem Fall das Schmelzelement schmilzt und es zum Kurzschluss kommt. Das Schmelzelement beabstandet den Kurzschlussbügel von den Elektroden und wirkt dabei der Federkraft des Klipps entgegen. Beim Schmelzen bewegt die Federkraft des Klipps den Kurzschlussbügel zu den Elektroden; dies führt zum elektrischen Kontakt und Kurzschluss. Vorteilhafterweise ist das Schmelzelement eine Lötpille. Eine Lötpille hat im Gegensatz zu einer Folie eine Ausdehnung, die sich auf alle drei Raumrichtungen erstreckt. Die Form kann beispielsweise kugel-, ellipsoid-, scheiben- oder quaderförmig sein; die Form ist aber nicht auf solche Grundformen beschränkt und kann auch komplexerer Struktur sein.

Der hohe Schmelzpunkt des Schmelzelements erlaubt auch den Schutz von Bauelementen bei Wechselspannungsbelastung mit höheren Strömen. Ferner erlaubt der hohe Schmelzpunkt des Schmelzkörpers, dass die Kurzschlussfunktion erst bei sehr hohen Temperaturen ausgelöst wird. Das Schutzelement ist auch geeignet, vorgegebene Schmelzabstimmungstests und -spezifikationen, beispielsweise als der Teil der Telcordia GR-974-CORE, zu erfüllen.

Das Material für ein Schmelzelement, beispielsweise in Form einer bleifreien Lötpille, kann eine Kombination von Wismut (auch als Bismut gezeichnet, Elementzeichen Bi), Zinn (Elementzeichen Sn) und Antimon (Elementzeichen Sb) umfassen. Die Anteile können je 25-35 % Wismut und Zinn sowie 50-70 % Antimon betragen. Vorteilhafterweise betragen sie 27-31 % Wismut sowie 27-31 % Zinn und 46-38 % Antimon, um einen hohen Schmelzpunkt des Materials und gute mechanische Eigenschaften für die Lötpille zu erreichen.

Der Klipp kann einstückig ausgebildet sein, was mit einer einfachen Fertigung einhergeht. Der erste Abschnitt umgreift in einer Ausführung mehr als die Hälfte des Umfangs des Überspannungsableiters, um eine sichere Befestigung zu erreichen. Der zweite Abschnitt kann als axiale Verbreiterung des Klippendes ausgebildet sein, sodass er die kurzzuschließenden Elektroden überspannt.

Bei einer Ausführung des Überspannungsableiters mit einer Mittelelektrode und zwei stirnseitig angeordneten Seitenelektroden ist der Klipp im Bereich der Mittelelektrode auf den Überspannungsableiter aufgeschnappt. Vorteilhafterweise weist der erste Abschnitt eine Aussparung mit einer Breite auf, die der Breite der Mittelelektrode entspricht. Die schlitzhafte Aussparung erlaubt, den Klipp derart aufzuschlappen, dass die Mittelelektrode sich durch die Aussparung erstreckt. Das Schmelzelement ist zwischen dem zweiten Abschnitt und der Mittelelektrode angeordnet, um den Kurzschlussbügel von den Elektroden zu beabstanden. Der zweite Abschnitt kann eine Halterung für das Schmelzelement für dessen sichere Fixierung aufweisen.

Die Erfindung wird im Folgenden anhand von Zeichnungen veranschaulicht.
- Figur 1: zeigt ein Ausführungsbeispiel eines elektrischen Schutzbauelements mit Kurzschlusseinrichtung in dreidimensionaler Darstellung.
- Figur 2: zeigt das Ausführungsbeispiel des elektrischen Schutzbauelements mit Kurzschlusseinrichtung in Seitenansicht.
- Figur 3: zeigt ein Ausführungsbeispiel eines Klipps.
- Figur 4: zeigt ein Ausführungsbeispiel eines Schmelzelements.

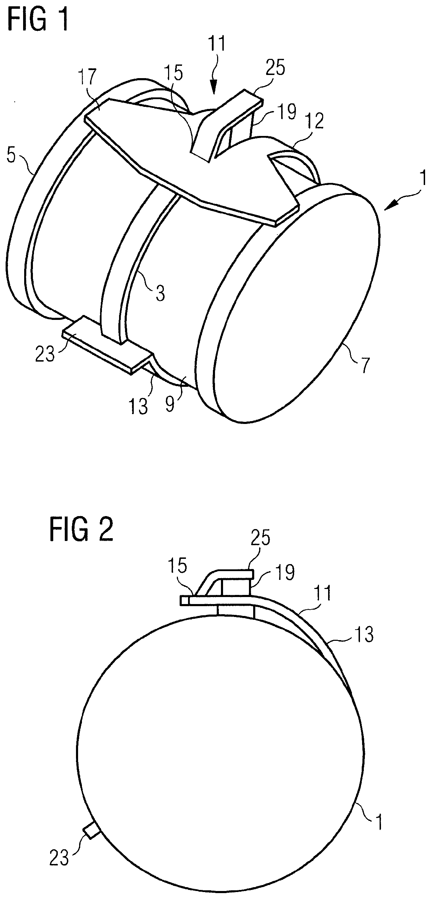

Figur 1 zeigt ein Ausführungsbeispiel eines elektrischen Schutzbauelements mit Kurzschlusseinrichtung in dreidimensionaler Darstellung. Das Ausführungsbeispiel wird in Figur 2 in der Seitenansicht dargestellt.

Das Ausführungsbeispiel umfasst einen Überspannungsableiter 1, der eine Mittelelektrode 3 und zwei stirnseitig angeordnete Seitenelektroden 5, 7 aufweist. Der Überspannungsableiter 1 hat einen zylinderförmigen Körper 9 aus isolierendem Material. Die Elektroden 3, 5, 7 erstrecken sich radial über den Körper 9 hinaus. In einem alternativen Ausführungsbeispiel (nicht dargestellt) entspricht die radiale Ausdehnung der Seitenelektroden der des Körpers; lediglich die Mittelelektrode springt vor.

Die thermische Kurzschlusseinrichtung 11 umfasst einen Klipp 12 und ein Schmelzelement 19. Der Klipp 12 hat einen ersten Abschnitt 13 und einen zweiten Abschnitt 15. Der erste Abschnitt 13 ist auf den Überspannungsableiter 1 aufgeschnappt. Der zweite Abschnitt 15 weist einen Kurzschlussbügel 17 auf, der sich zwischen den Seitenelektroden 5, 7 über die Mittelelektrode 3 erstreckt ohne die Elektroden 3, 5, 7 zu berühren. Der Kurzschlussbügel 17 ist durch das Schmelzelement 19, das zwischen den Überspannungsableiter 1 und den Kurzschlussbügel 17 geklemmt ist, von den Elektroden 3, 5, 7 beabstandet, sodass über den Kurzschlussbügel 17 keine leitende Verbindung zwischen diesen zu Stande kommt.

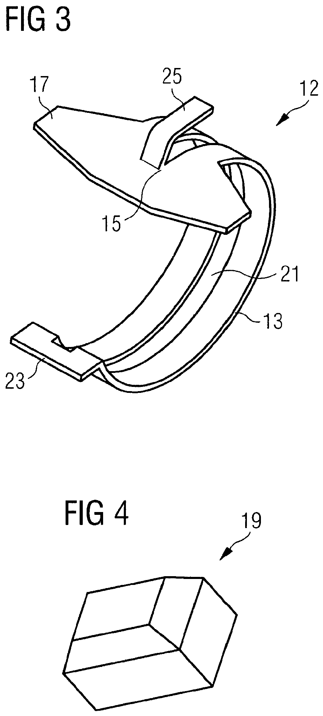

Figur 3 zeigt den Klipp 15 der Kurzschlusseinrichtung 11. Der Klipp 12 ist einstückig ausgebildet und kann beispielsweise aus einem gestanzten Blech geformt sein. Der erste Abschnitt 13 ist auf den Überspannungsableiter 1 aufgeschnappt.

Der erste Abschnitt 13 hat einen im Wesentlichen kreisabschnittförmigen Querschnitt. Abgesehen von seinen Enden hat der erste Abschnitt 13 die Form einer geschlitzten Hülse. Er ist geeignet, mehr als die Hälfte des zylindrischen Überspannungsableiterkörpers 9 zu umfassen, wenn der Klipp 12 aufgeschnappt ist. Der erste Abschnitt 13 ist elastisch verformbar, sodass er durch seine Federkraft auf dem Überspannungsableiterkörper 9 klemmt.

Der erste Abschnitt 13 hat eine radial verlaufende Aussparung 21 mit einer Breite, die der Breite der Mittelelektrode 3 entspricht. Nach dem Aufschnappen erstreckt sich die Mittelelektrode 3 durch die Aussparung 21. Dies erlaubt, den Klipp 12 an einer vorgegebenen Position, nämlich an der Mittelelektrode 3, zu befestigen und verhindert dessen Verrutschen in axialer Richtung.

Ein Ende des ersten Abschnitts 13 ist radial nach außen gebogen und weist einen Steg 23 auf, der die Aussparung 21 an dieser Seite begrenzt. Beim Aufschnappen des Klipps 12 verläuft der Steg 23 über der Mittelelektrode 3. Der Steg 23 dient der Stabilität. In einem alternativen Ausführungsbeispiel (nicht dargestellt) hat der erste Abschnitt eine einseitig offene Aussparung, ohne den Steg 23, sodass langestreckte Bereiche des Klipps zu beiden Seiten der Aussparung beim aufgeschnappten Klipp beidseitig der Mittelelektrode verlaufen.

Am anderen Ende des ersten Abschnitts 13 befindet sich der zweite Abschnitt 15, der durch eine axiale Verbreiterung des Klippendes ausgebildet ist. Der zweite Abschnitt 15 weist eine Halterung für das Schmelzelement 19 auf. Sie ist in diesem Ausführungsbeispiel als Zunge 25 ausgebildet, die durch Einschnitte im zweiten Abschnitt 15 geformt und derart gebogen ist, dass sie geeignet ist, das Schmelzelement 19 von oben auf die Mittelelektrode 3 zu drücken. Alternative Ausgestaltungen (nicht dargestellt), beispielsweise Sacklöcher oder Aussparungen im zweiten Abschnitt, sind auch als Halterung geeignet.

Figur 4 zeigt ein Ausführungsbeispiel eines Schmelzelements 19, welches auch als Lötpille bezeichnet werden kann. Das Schmelzelement 19 hat eine dreidimensionale Struktur mit einer signifikanten Ausdehnung in die drei Richtungen des Raumes. Es kann beispielsweise kugel-, ellipsoid-, quader- oder scheibenförmig sein. Auch eine Kombination aus verschiedenen Formenschätzen ist möglich. Das Ausführungsbeispiel hat die Form eines Quaders mit pyramidenstumpfförmigem Aufsatz. Eine sich nach oben verjüngende Form erlaubt nicht nur die Fixierung durch eine radial auf die Oberseite des Schmelzelements 19 einwirkende Kraft, wie die auf das Schmelzelement 19 drückende Zunge 25, sondern auch durch im Randbereich auf den sich verjüngenden Bereich wirkende Klemmkräfte mit tangentialer Komponente.

Das Schmelzelement 19 hat einen Schmelzpunkt von ungefähr 300 Grad Celsius oder mehr und ist aus bleifreiem Material.

Das Material des Schmelzelements 19 kann eine Kombination von Wismut, Zinn und Antimon umfassen. Beispielsweise können bei solch einem Schmelzelement 25-35 % Wismut und 25-35 % Zinn vorgesehen sein. Vorteilhafterweise umfasst das Material des Schmelzelements 27-31 % Wismut sowie 27-31 % Zinn und 38-46 % Antimon. Die Prozentangaben können sich auf Volumen- oder Massenprozentangaben beziehen.

### Bezugszeichenliste

- 1: Überspannungsableiter
- 3: Mittelelektrode
- 5, 7: Seitenelektrode
- 9: Überspannungsableiterkörper
- 11: Kurzschlusseinrichtung
- 12: Klipp
- 13: erster Abschnitt
- 15: zweiter Abschnitt
- 17: Kurzschlussbügel
- 19: Schmelzelement
- 21: Aussparung
- 23: Steg
- 25: Zunge

## Patentansprüche

1. Elektrisches Schutzbauelement mit Kurzschlusseinrichtung aufweisend
- einen Überspannungsableiter (1) mit stirnseitig angeordneten Seitenelektroden (5, 7) und einer Mittelelektrode (3),
- eine thermische Kurzschlusseinrichtung, die einen Klipp (12) umfasst, dessen erster Abschnitt (13) auf den Überspannungsableiter (1) aufgeschnappt ist und dessen zweiter Abschnitt (15) einen Kurzschlussbügel (17), der sich zwischen den Seitenelektroden (5, 7) über die Mittelelektrode (3) erstreckt, aufweist,
wobei der Kurzschlussbügel (17) des Klipps (12) mittels eines Schmelzelements (19) von zumindest einer der Elektroden (3, 5, 7) beabstandet ist
und der Kurzschlussbügel (17) beim Schmelzen des Schmelzelements (19) zwei der Elektroden (3, 5, 7) elektrisch leitend miteinander verbindet,
**dadurch gekennzeichnet, dass** das Schmelzelement (19) einen Schmelzpunkt von mindestens 300 Grad Celsius hat,
und dass das Schmelzelement (19) zwischen den Überspannungsableiter (1) und den Kurzschlussbügel (17) geklemmt ist.

2. Elektrisches Schutzbauelement mit Kurzschlusseinrichtung nach Anspruch 1,
wobei das Schmelzelement (19) als bleifreie Lötpille ausgebildet ist.

3. Elektrisches Schutzbauelement mit Kurzschlusseinrichtung nach Anspruch 1 oder 2,
wobei das Schmelzelements (19) Wismut, Zinn und Antimon umfasst.

4. Elektrisches Schutzbauelement nach einem der vorhergehenden Ansprüche,
wobei das Material, aus dem das Schmelzelement (19) geformt ist, 25-35 % Wismut und 25-35 % Zinn und 30-50 % Antimon umfasst.

5. Elektrisches Schutzbauelement nach Anspruch 4,
wobei das Material, aus dem das Schmelzelement geformt ist, 27-31 % Wismut sowie 27-31 % Zinn und 38-46 % Antimon umfasst.

6. Elektrisches Schutzbauelement nach einem der vorhergehenden Ansprüche,
wobei der Klipp (12) einstückig ausgebildet ist.

7. Elektrisches Schutzbauelement nach einem der vorhergehenden Ansprüche,
wobei der erste Abschnitt (13) mehr als die Hälfte des Umfangs des Überspannungsableiters (1) umgreift.

8. Elektrisches Schutzbauelement nach einem der vorhergehenden Ansprüche,
wobei der zweite Abschnitt (15) durch eine axiale Verbreiterung des Klippendes ausgebildet ist.

9. Elektrisches Schutzbauelement nach einem der vorhergehenden Ansprüche,
wobei der Klipp (12) im Bereich der Mittelelektrode (3) auf den Überspannungsableiter (1) aufgeschnappt ist.

10. Elektrisches Schutzbauelement nach Anspruch 9,
wobei der erste Abschnitt (13) eine Aussparung mit einer Breite aufweist, die der Breite der Mittelelektrode (3) entspricht.

11. Elektrisches Schutzbauelement nach Anspruch 10,
wobei das Schmelzelement (19) zwischen dem zweiten Abschnitt (15) und der Mittelelektrode (3) angeordnet ist.

12. Elektrisches Schutzbauelement nach einem der vorhergehenden Ansprüche,
wobei der zweite Abschnitt (15) eine Halterung (25) für das Schmelzelement (19) aufweist.

13. Elektrisches Schutzbauelement nach einem der Ansprüche 9 bis 12,
wobei der Kurzschlussbügel (17) sowohl von der Mittelelektrode (3) als auch den Seitenelektroden (5, 7) beabstandet ist, sofern das Schmelzelement (19) noch nicht geschmolzen ist.

## Claims

1. Electrical protection component having a short-circuiting device having
- a surge arrester (1) having side electrodes (5, 7) arranged on an end side and a central electrode (3),
- a thermal short-circuiting device, which comprises a clip (12), the first section (13) of which is snapped onto the surge arrester (1) and the second section (15) of which has a short-circuiting link (17) that extends between the side electrodes (5, 7) across the central electrode (3),
wherein the short-circuiting link (17) of the clip (12) is spaced apart from at least one of the electrodes (3, 5, 7) by means of a fusible element (19)
and the short-circuiting link (17) electrically conductively connects two of the electrodes (3, 5, 7) to one another when the fusible element (19) melts,
**characterized in that** the fusible element (19) has a melting point of at least 300 degrees Celsius, and **in that** the fusible element (19) is clamped between the surge arrester (1) and the short-circuiting link (17).

2. Electrical protection component having a short-circuiting device according to Claim 1, wherein the fusible element (19) is designed as a lead-free solder bead.

3. Electrical protection component having a short-circuiting device according to Claim 1 or 2, wherein the fusible element (19) comprises bismuth, tin and antimony.

4. Electrical protection component according to one of the preceding claims, wherein the material from which the fusible element (19) is formed comprises 25-35% bismuth and 25-35% tin and 30-50% antimony.

5. Electrical protection component according to Claim 4, wherein the material from which the fusible element is formed comprises 27-31% bismuth and 27-31% tin and 38-46% antimony.

6. Electrical protection component according to one of the preceding claims, wherein the clip (12) is of one-piece design.

7. Electrical protection component according to one of the preceding claims, wherein the first section (13) encompasses more than half of the circumference of the surge arrester (1).

8. Electrical protection component according to one of the preceding claims, wherein the second section (15) is formed by an axial widened portion of the clip end.

9. Electrical protection component according to one of the preceding claims, wherein the clip (12) is snapped onto the surge arrester (1) in the region of the central electrode (3).

10. Electrical protection component according to Claim 9, wherein the first section (13) has a recess with a width corresponding to the width of the central electrode (3).

11. Electrical protection component according to Claim 10, wherein the fusible element (19) is arranged between the second section (15) and the central electrode (3).

12. Electrical protection component according to one of the preceding claims, wherein the second section (15) has a mount (25) for the fusible element (19).

13. Electrical protection component according to one of Claims 9 to 12, wherein the short-circuiting link (17) is spaced apart both from the central electrode (3) and from the side electrodes (5, 7) provided the fusible element (19) has not yet melted.

## Revendications

1. Composant de protection électrique pourvu d'un dispositif de court-circuit, ledit composant comportant
- un parafoudre (1) pourvu d'électrodes latérales (5, 7) disposées du côté frontal et une électrode centrale (3),
- un dispositif de court-circuit thermique qui comprend un clip (12) dont une première portion (13) est encliquetée sur le parafoudre (1) et dont une deuxième portion (15) comporte un étrier de court-circuit (17) qui s'étend entre les électrodes latérales (5, 7) au-dessus de l'électrode centrale (3), l'étrier de court-circuit (17) du clip (12) étant espacé d'au moins une des électrodes (3, 5, 7) au moyen d'un élément fusible (19) et l'étrier de court-circuit (17) reliant deux des électrodes (3, 5, 7) l'une à l'autre d'une manière électriquement conductrice lors de la fusion de l'élément fusible (19),
**caractérisé en ce que** l'élément fusible (19) présente un point de fusion d'au moins 300 degrés Celsius et **en ce que** l'élément fusible (19) est serré entre le parafoudre (1) et l'étrier de court-circuit (17).

2. Composant de protection électrique pourvu d'un dispositif de court-circuit selon la revendication 1, l'élément fusible (19) étant conçu comme une pastille à souder sans plomb.

3. Composant de protection électrique pourvu d'un dispositif de court-circuit selon la revendication 1 ou 2, l'élément fusible (19) comprenant du bismuth, de l'étain et de l'antimoine.

4. Composant de protection électrique selon l'une des revendications précédentes,
le matériau à partir duquel l'élément fusible (19) est formé comprenant 25 à 35 % de bismuth et 25 à 35 % d'étain et 30 à 50 % d'antimoine.

5. Composant de protection électrique selon la revendication 4,
le matériau à partir duquel l'élément fusible est formé comprenant 27 à 31 % de bismuth et 27 à 31 % d'étain et 38 à 46 % d'antimoine.

6. Composant de protection électrique selon l'une des revendications précédentes,
le clip (12) étant formé d'une seule pièce.

7. Composant de protection électrique selon l'une des revendications précédentes,
la première portion (13) s'engageant autour de plus de la moitié de la circonférence du parafoudre (1).

8. Composant de protection électrique selon l'une des revendications précédentes,
la deuxième portion (15) étant formée par un élargissement axial de l'extrémité du clip.

9. Composant de protection électrique selon l'une des revendications précédentes,
le clip (12) étant encliqueté sur le parafoudre (1) dans la région de l'électrode centrale (3).

10. Composant de protection électrique selon la revendication 9,
la première portion (13) comportant un évidement d'une largeur qui correspond à la largeur de l'électrode centrale (3).

11. Composant de protection électrique selon la revendication 10,
l'élément fusible (19) étant disposé entre la deuxième portion (15) et l'électrode centrale (3).

12. Composant de protection électrique selon l'une des revendications précédentes,
la deuxième portion (15) comportant un support (25) destiné à l'élément fusible (19).

13. Composant de protection électrique selon l'une des revendications 9 à 12,
l'étrier de court-circuit (17) étant espacé aussi bien de l'électrode centrale (3) que des électrodes latérales (5, 7) si l'élément fusible (19) n'a pas encore fondu.
